# EUROPEAN PATENT APPLICATION

(11) **EP 4 024 082 A1**
(43) Date of publication of application: **06.07.2022**
(21) Application number: 20217635.0
(22) Date of filing: 29.12.2020
(51) Int. Cl.: G01S 13/87, G01S 7/41, G01S 13/04, G01S 13/42, G01S 13/56, G01S 7/00, G01S 13/46

(54) **METHOD AND DEVICE FOR DETECTING DISEASE PATTERNS IN AN ENVIRONMENT**

(71) Applicant: Robert Bosch GmbH, 70442 Stuttgart (DE)
(72) Inventor: Maia De Sant Ana, Pedro, 70197 Stuttgart (DE); Marchenko, Nikolaj, 70180 Stuttgart (DE)

(57) **Abstract**

The invention relates to a method for monitoring a health state of one or more individuals (4) in an environment, comprising the steps of:
- Localizing (S1 - S3) one or more individuals (4) in one or more surveillance ranges (S) in the environment (E) by means of localization RF signals (LS);
- Emitting (S4) scanning signals and scanning for reflected scanning signals by means of scanning RF signals (SS) directed towards each localized individual (4) by beamforming;
- Sampling (S5) a signal pattern from each of the reflected scanning signals;
- Analyzing (S7) the sampled signal pattern based on a classification model to determine one or more body motions for each of the localized one or more individuals (4);
- Associating (S8) a health state to the respective localized individual (4) depending on the determined one or more body motions.

## Description

### Technical Field

The present invention relates to analyzing RF signals for detecting behavioral patterns of individuals in an environment.

### Technical background

Pandemics based on respiratory viruses such as Covid-19 form a substantial threat of populations and societies. Particularly, depending on long incubation periods the public health threat is serious as long as no vaccines and treatments against the viruses are available. Extreme social distancing is pretty much the only intervention available to help individuals stay healthy and break the chain of transmission.

Besides the known measures such as lockdown and separating people also an early detection of possibly ill individuals is important so that they can be separated from other non-ill individuals, such as by quarantine or the like.

### Summary of the invention

According to the present invention it is provided a method for detecting a disease pattern of an individual in an environment according to claim 1, a device and a system according to further independent claims.

Further embodiments are indicated in the depending subclaims.

According to a first aspect a method for monitoring a health state of one or more individuals in an environment is provided, comprising the steps of:
- Localizing one or more individuals in one or more surveillance ranges in the environment by means of localization RF signals;
- Emitting scanning signals and scanning for reflected scanning signals by means of scanning RF signals directed towards each localized individual by beamforming or beamsteering;
- Sampling a signal pattern from each the reflected scanning signals;
- Analyzing the sampled signal pattern based on a classification model to determine one or more body motions for each of the localized one or more individuals;
- Associating a health state to the respective localized individual depending on the determined one or more body motions.

In order to check the health status of individuals at public places, the individuals' body characteristics have to be monitored. However, a basic problem is to protect the privacy of the individuals. Identifying an individual health pattern of individuals without their explicit consent is not well accepted. Particularly, the general acceptance of specific devices carried by the individuals or apps installed on their smartphones for analyzing the health state of the individuals is not so high that it would suffice to provide a full coverage for health monitoring. General acceptance of transmitting the monitored health state to a third party or an authority is even lower.

Otherwise particularly at public places such as airports, city environments or other crowded places the following of social distancing is difficult and cannot be guaranteed. Here, it is of essential importance to timely identify and separate infected individuals from other people. Due to the insufficient acceptance of personal involvement, personally or via carried devices, the detecting of any health issues such as an infection has to be accomplished remotely by external measures.

According to above method the use of radio frequency (RF) signals is provided for determining health issues of individuals in a surveillance range. Non-healthy individuals in the surveillance range may show disease patterns which may cause body motions. Body motions include all motions carried out by the body or by body parts and can reach from micromotions such as heartbeat macromotions such as sneezing or breathing or the like. Those body motions can be detected from remote by means of RF signals and can be classified for determining possibly infectious diseases.

This method applies firstly a localization step and secondly a scanning step of scanning of detected individuals in the surveillance range. The applied signals are RF electromagnetic signals which are transmitted by one or more base stations such as mobile communication base stations, WIFI routers and the like.

Preferably, the localizing signals and the scanning signals may be provided by a base station, particularly a 5G base station with a beamforming antenna. 5G base stations are preferred due to the capability of sending beamformed signals such as by a beamforming antenna. However, other base stations which are employed with beamforming capabilities may be applied as well.

In the localization step localization RF signals are transmitted by the respective base station into the surveillance range. The localization RF signals are reflected at objects and individuals, so that reflected localization signals may be received in the base station. By means of processing capabilities in the base stations and/or the central unit one or more individuals are localized in the surveillance range.

The localization using localization RF signals can be performed by statistical analysis of the received localization signals metrics, such as angle of arrival, received power, time of arrival, grid concepts and multi antenna processing, using techniques that can vary from simple triangulation to Bayesian statistical analysis, Kalman filtering and Machine learning algorithms. These processes are well known in the art.

The reflected localization signals may be very noisy and weak signals. By analyzing the received signals pattern, the received reflected localization signals cannot be used for more than roughly localizing of individuals in the surveillance range of the antenna of the base station.

Once the positions of the one or more individuals in the surveillance range are determined a scanning step can be performed. In the scanning step, scanning signals can be transmitted using beamforming. The scanning of reflected scanning signals may be performed successively for each individual by directing the scanning signals to the localized individuals for a predetermined period of time, particularly of between 1 to 20 seconds.

Beamforming or beamsteering is about changing the direction of the main lobe of a radiation pattern. In radio and radar systems, beam steering may be accomplished by switching the antenna elements or by changing the relative phases of the RF signals driving the antenna elements. Beamforming or beamsteering allows to direct RF electromagnetic waves of the scanning signal with a higher energy to the detected position of each of the localized individual successively. Beamformed signals usually concentrate the transmitted electromagnetic energy within a restricted angular range so that energy density for the scanning signals is higher.

The reflected scanning signals are received. Using a beamformed RF scanning signal the signal-to-noise ratio of the reflected signal can be improved so that the effect of even slight motions in or on the to be scanned individual onto the reflected RF signal can be analyzed. This allows to obtain more precise less noisy (i.e. signals with a higher signal-to-noise ratio) received scanning signals.

The time characteristics of the received scanning signals can be duly analyzed over the predetermined period of time. The analyzing can be performed by detecting body motions resulting in a time variation of the signal strength of the reflected scanning signal. The time variation of the signal strength of the received RF scanning signals is the result of body motions caused by body characteristics such as heartbeat, coughing, sneezing, breathing or other body features which are reflected by any kind of motion.

According to an embodiment a sampled signal pattern may be obtained by sampling a signal strength of the reflected scanning signals, particularly in a sampling frequency range of 1 to 60 Hz.

Moreover, the sampled signal pattern may be classified by means of a given classification model, particularly a data-driven classification model, being configured or trained to associate one or more body motions to the sampled signal pattern. By means of a given classification model sampled signal patterns can be associated to any kind of body motions which may form symptoms of a disease so that potential diseases can be associated to each individual showing symptoms resulting in one or a series of body motions.

It may be provided that the sampled signal pattern is classified by means of a classification model, particularly a data-driven classification model, being further configured or trained to associate at least one of body measures, such as height, weight and gender, to the sampled signal pattern.

Furthermore, the health state is associated to the respective localized individual based on a disease recognition model wherein the disease recognition model is configured or trained to associate a succession of one or more body motions of a respective individual to a health state, a potential occurrence of a disease or an infection.

Above method allows to monitor given environment with conventional base stations having controllable beamforming antenna characteristics so that disease monitoring of individuals can be implemented in urban environments without requiring additional hardware installments.

By centralizing the disease classification model being in communication with a number of base stations, the monitored area is highly scalable.

According to a further aspect a system for monitoring a health state of one or more individuals in an environment is provided, comprising base stations and a central unit being in communication with the base stations, wherein the base stations are configured to:
- localize one or more individuals in one or more surveillance ranges in the environment by means of localization RF signals;
- emit scanning signals and scan for reflected scanning signals by means of scanning RF signals directed towards each localized individual by beamforming;
- sample a signal pattern from each the reflected scanning signals;
wherein one of the base stations and the central unit is configured to analyze the sampled signal pattern based on a classification model to determine one or more body motions for each of the localized one or more individuals;
wherein the central unit is configured to associate a health state to the respective localized individual depending on the determined one or more body motions.

### Brief description of the drawings

Embodiments are described in more detail in conjunction with the accompanying drawings in which:
- Figure 1: illustrates a system for detecting decease patterns in a distributed environment;
- Figure 2: a flowchart illustrating method for detecting a decease pattern of an individual environment.

### Description of embodiments

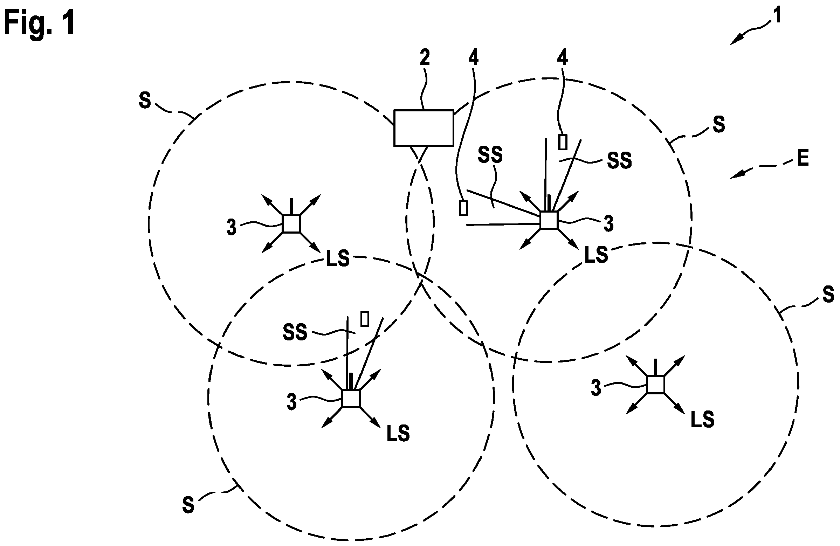

Figure 1 systematically shows a system 1 for detecting decease patterns of individuals in a distributed environment E. The system 1 has central unit 2 being in wired or wireless communication with a number of wide-spread base stations 3 covering the environment E with own surveillance ranges S.

The base stations 3 can be stations for mobile communication, WIFI routers or the like. The base stations 3 can also be particularly configured to transmit localization RF signals LS and receive reflected localization signals and to transmit beamformed scanning signals SS and receive reflected beamformed scanning signals into and from a specified direction, respectively. The RF signals transmitted by the base stations 3 can be standard electromagnetic radiation in frequency range preferably between 3 kHz to 10 GHz. Each of the base stations 3 covers a surveillance range S in which one or more individuals 4 can be localized and scanned in a scanning step to monitor and check their health statuses.

The base stations 3 can be combined with or making use of 5G base stations capabilities for mobile communication which usually provide a good coverage in urban environments. This allows that no additional hardware equipment is required as 5G base stations usually have the capability of directing transmission beams onto positions in the environment E by beamforming.

Any kind of base stations can be used. The proposed methodology is suitable for either a sub-6 GHz RF configuration or millimeter-wave RF set up. The base station should be configured to allow a sufficient accuracy of the localization step and scanning step.

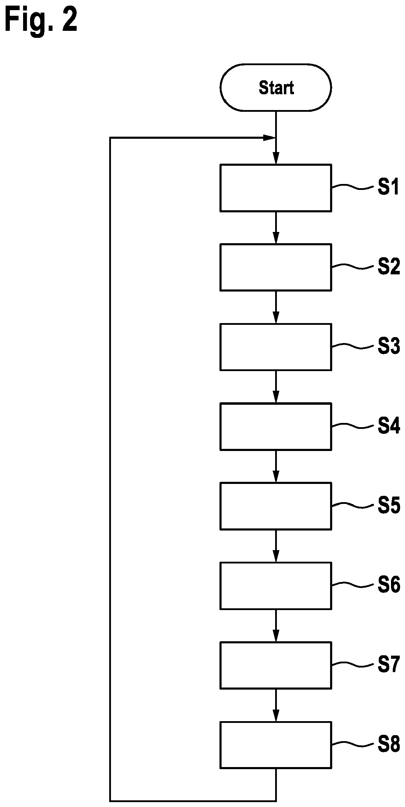

The operation of the system 1 is described in more detail in conjunction with the flowchart of figure 2.

In step S1 RF localization signals are transmitted from each of the base stations 3 which can be generated separately or can be part of mobile communication signals broadcast for other purposes. The localization signals LS are transmitted with coverage of the surveillance range S of each base station 3.

The localization signals can be defined by any reference signal measure, similar to the RSRP, RSRQ or RSSI from the 3GPP standards, or Wi-Fi beacons from IEEE standards.

In step S2 reflected signals are received and analyzed. The reflected localization signals LS can be analyzed in each of the base stations 3 or can be transformed and sent to the central unit 2. Each base station 3 or the central unit 2, for each base station 3, may be configured to perform a method for localization of one or more individuals 4 in the surveillance range S of the respective base station 3.

Since the localization signals LS are transmitted with coverage of the full surveillance range S the received reflected localization signal LS usually have a low signal strength resulting in a low signal-to-noise ratio of the reflected localization signal LS.

However, the reflected localization signal LS allows to perform a localization of individuals 4 in the respective surveillance range so that in step S3 localization data indicating a set of positions of one or more individuals 4 can be determined in or sent to each of the base stations 3, respectively.

The localization using localization RF signals can be performed by statistical analysis of the received localization signals metrics, such as angle of arrival, received power, time of arrival, grid concepts and multi antenna processing, using techniques that can include simple triangulation, Bayesian statistical analysis, Kalman filtering and Machine learning algorithms. These processes are well known in the art.

The analyzing of the reflected localization signals LS can also be performed using a localization model which can be a physical model, data-driven model, a machine learning model or the like. Moreover, the resulting localization data can be obtained by a scanning function of a 5G base station which allows to determine individual positions based on the reflected localization signals. Basically, the localization signals shall serve to localize positions of individuals 4 in the respective surveillance ranges S.

Once the individuals 4 are localized in the surveillance ranges S of the base stations 3, the base stations 3 are instructed to provide in step S4 a beam-formed scanning signal directed to each of the positions of the individuals 4 successively. In this manner, each of the positions of the individuals 4 is radiated with the beam-formed scanning signal. The time period in which the beam-formed scanning signal are directed onto each of the positions of the individuals 4 has a duration of between 1 - 20 seconds, preferably between 5 seconds to 10 seconds.

The scanning procedure can be performed by constant beam steering and beam switching towards the tracked individual. The process combines an emitting of scanning signals and listening to reflected scanning signals, that repetitively scan each located individual 4 to collect particular statistical patterns from the data.

The scanning signals S are reflected at the located individuals 4 they are directed on. The received reflected scanning signals SS are respectively converted in step S5 to a corresponding signal pattern of the reflected scanning signals. The received scanning signals SS are therefore sampled preferably with a sampling rate of 10 to 50 Hertz as body motions of the concerned individual 4 shall be detected. The sampling is mainly based on the received signal strength but can also include other metrics such as phase and the like.

Body motions may include motions performed by the body or body parts and may include micromotions such as the heartbeat, muscle contractions or the like and macromotions including sneezing, coughing, cramping and the like. Particularly, such motion patterns cause significant characteristic signal patterns which can be distinguished from other everyday motions of an individual's body such as moving arms, walking, sitting, turning head or the like.

The so obtained sampled signal pattern is transmitted in step S6 to the central unit 2 together with individual position of or a reference to the respective individual 4.

In the central unit 2 each of the sampled signal pattern of the reflected scanning signal SS is analyzed in step S7 by means of a classification model. The classification model is configured or trained to associate the sampled signal pattern to a corresponding identified body motion, such as heartbeat, muscle contractions, sneezing, coughing, cramping and the like. For heartbeat further information such as the heartrate may be obtained as well.

One can improve accuracy by adding individual information, such as height, weight and gender that can also be anonymously estimated from the signal pattern by means of the classification model.

As a classification model well known data based models can be used such as artificial neural networks, recurrent neural networks including LSTM (long short term memory) or GRU.

The identified body motions can be associated to each of the individuals 4. In several cycles a succession of body motions can be associated to a specific individual 4 in the environment E.

By means of a disease recognition model the body motions associated to each individual 4 are associated in step S8 to a normal health state or any of disease states. The disease recognition model may be a data-driven model, such as an artificial neural network or the like and being trained to associate a succession of one or more identified body motions to disease symptoms and/or to a potential occurrence of a disease or an infection. For instance, a high frequency of coughing and sneezing may indicate a flu. Heavy breathing may indicate a respiratory disease in general.

In other embodiments instead of the classification model an anomaly detection model can be used to distinguish between a normal health state and anormal health states.

## Claims

1. Computer-implemented Method for monitoring a health state of one or more individuals (4) in an environment, comprising the steps of:
- Localizing (S1 - S3) one or more individuals (4) in one or more surveillance ranges (S) in the environment (E) by means of localization RF signals (LS);
- Emitting (S4) scanning RF signals and scanning for reflected scanning signals by means of scanning RF signals (SS) directed towards each localized individual (4) by beamforming or beamsteering;
- Sampling (S5) a signal pattern from each of the reflected scanning signals;
- Analyzing (S7) the sampled signal pattern based on a classification model to determine one or more body motions for each of the localized one or more individuals (4);
- Associating (S8) a health state to the respective localized individual (4) depending on the determined one or more body motions.

2. Method according to claim 1, wherein the localizing signals and the scanning signals are provided by a base station (3), particularly a 5G base station with a beamforming antenna.

3. Method according to claim 2, wherein localization is performed by statistical analysis of metrics of the received localization signal, such as angle of arrival, received power, and time of arrival, using techniques that include simple triangulation, Bayesian statistical analysis, Kalman filtering and Machine learning algorithms.

4. Method according to any of the claims 1 to 3, wherein scanning of body motions is performed successively for each located individual (4) by directing the scanning signals to the localized individuals (4) for a predetermined period of time, particularly of between 1 to 20 seconds.

5. Method according to any of the claims 1 to 4, wherein the sampled signal pattern is obtained by sampling a signal strength of the reflected scanning signals, particularly in a sampling frequency range of 1 to 60 Hz.

6. Method according to any of the claims 1 to 5, wherein the sampled signal pattern is classified by means of a classification model, particularly a data-driven classification model, being configured or trained to associate at least one or more body motions to the sampled signal pattern.

7. Method according to claim 6, wherein the sampled signal pattern is classified by means of a classification model, particularly a data-driven classification model, being further configured or trained to associate at least one of body measures, such as height, weight and gender, to the sampled signal pattern.

8. Method according to any of the claims 1 to 7, wherein the health state is associated to the respective localized individual (4) based on a disease recognition model wherein the disease recognition model is configured or trained to associate a succession of one or more body motions of a respective individual to a health state, a potential occurrence of a disease or an infection.

9. Method according to any of the claims 1 to 8, signaling the health state of the localized individuals.

10. System (1) for monitoring a health state of one or more individuals in an environment, comprising a number of base stations (3) and a central unit (2) being in communication with the number of base stations (3), wherein at least one of the base stations (3) are configured to:
- localize one or more individuals (4) in one or more surveillance ranges in the environment by means of localization RF signals;
- emit scanning signals and scan for reflected scanning signals by means of scanning RF signals directed towards each localized individual (4) by beamforming or beamsteering;
- sample a signal pattern from each of the reflected scanning signals;
wherein one of the base stations (3) and the central unit (2) is configured to analyze the sampled signal pattern based on a classification model to determine one or more body motions for each of the localized one or more individuals (4);
wherein the central unit (2) is configured to associate a health state to the respective localized individual (4) depending on the determined one or more body motions.

11. Central unit (2) configured or used in a system of claim 10.

12. A computer program product comprising a computer readable medium, having thereon computer program code means, when said program is loaded, to make the computer execute procedures to perform all steps of the method according to any of the claims 1 to 9.

13. A machine readable medium, having a program recorded thereon, where the program is to make the computer execute a method according to any of the claims 1 to 9.
